# FASCICULE DE BREVET EUROPEEN

(11) **EP 1 257 763 B1**
(45) Date de publication et mention de la délivrance du brevet: **01.12.2004**
(21) Numéro de dépôt: 01993791.1
(22) Date de dépôt: 05.11.2001
(51) Int. Cl.: F16L 58/00

(54) **DISPOSITIF DE PROTECTION CATHODIQUE DES CONDUITES FLEXIBLES**
VORRICHTUNG FÜR DEN KATHODISCHEN SCHUTZ BIEGSAMER ROHRE
CATHODIC PROTECTIVE DEVICE FOR FLEXIBLE PIPES

(30) Priorité: 10.11.2000 FR 0014463
(43) Date de publication de la demande: 20.11.2002
(73) Titulaire: TECHNIP FRANCE, 92400 Courbevoie (FR)
(72) Inventeur: BERTON, Hugues, F-76940 La Mailleraye-sur-Seine (FR); STREIFF, Jean-Luc, 77079 TX Houston (US)
(74) Mandataire: Bertrand, Didier
(86) Numéro de dépôt international: PCT/FR2001/003402
(87) Numéro de publication internationale: WO 2002/039008

(56) Documents cités:
- US-A- 3 868 313
- US-A- 3 990 478
- US-A- 6 123 114

## Description

La présente invention concerne un dispositif de protection cathodique des conduites flexibles utilisées dans l'industrie pétrolière en mer et comportant dans les couches externes au moins une gaine polymérique d'étanchéité et un élément structurel métallique tel qu'une nappe d'armures.

Les conduites flexibles servent au transport de pétrole brut entre une tête de puits ou autre système sous-marin et une structure flottante telle qu'une plate-forme.

Les conduites flexibles comprennent généralement une gaine d'étanchéité externe polymérique et une gaine d'étanchéité interne. L'annulaire, ménagé entre ces gaines d'étanchéité externe et interne, constitue un espace dans lequel sont logés des éléments structurels métalliques tel que des nappes d'armures, une voûte de pression, une frette, etc., selon le type de conduite flexible utilisé. Les divers types de conduite flexibles sont décrits et représentés dans l'API 17J (AMERICAN PETROLEUM INSTITUTE).

Lorsque la gaine d'étanchéité externe d'une conduite flexible qui est immergée dans l'eau de mer vient à être endommagée pour quelque raison que ce soit, une partie de l'élément métallique immédiatement adjacent, généralement une nappe d'armures qui est constituée par un enroulement hélicoïdal d'un certain nombre de fils métalliques autour de l'axe longitudinal de ladite conduite flexible, est exposée et en contact avec l'eau de mer, la surface de nappe d'armures ainsi exposée dépendant de l'importance de la déchirure créée dans la gaine externe.

Le contact avec l'eau de mer provoque une corrosion qui peut se propager sur toute la longueur de la conduite flexible.

Pour empêcher la corrosion des éléments métalliques de la conduite flexible et due à une pénétration de l'eau de mer dans l'annulaire, le moyen le plus utilisé est ce qu'on appelle la «protection cathodique» bien connue des spécialistes. La protection cathodique consiste à créer une pile électrochimique de manière à diminuer le potentiel d'immunité.

En effet, chaque métal présente un potentiel de référence, appelé potentiel de corrosion, par rapport au milieu aqueux, lequel potentiel varie en fonction du niveau de la corrosion. Plus la corrosion est importante et plus le potentiel du métal est élevé par rapport au potentiel de référence. Inversement, plus la corrosion est faible et plus le potentiel du métal est faible par rapport au potentiel de référence.

Dans le cas de conduites flexibles comprenant de l'acier, le potentiel de référence de l'acier est de - 440 mV et le potentiel d'immunité est de - 850 mV.

Tant que la zone métallique d'une conduite flexible en contact avec l'eau de mer présente un potentiel inférieur à - 850 mV, les réactions sont essentiellement cathodiques et ladite zone ne se corrode pas. Pour réaliser une protection cathodique, l'acier à protéger est mis en contact électrique avec un métal moins noble qui a un potentiel de référence plus faible, comme celui de l'aluminium qui est de - 1 100 mV, ce métal moins noble jouant le rôle d'une anode alors que la zone d'acier à protéger joue le rôle d'une cathode. Au niveau du contact, l'acier aura le potentiel de l'anode, ce potentiel augmentant au fur et à mesure qu'on s'éloigne de l'anode, cela étant dû à la résistance des éléments métalliques structurels de la conduite flexible à protéger et à la densité du courant d'échange.

La densité de courant dépend de la section de la zone dénudée du contact avec l'eau de mer ou plus simplement du trou provoqué dans la gaine d'étanchéité externe. La formule donnant la valeur de la densité du courant en fonction de la section du trou est bien connue des spécialistes.

Le nombre d'anodes est déterminé de telle sorte qu'en tout point de la conduite flexible entre deux anodes consécutives, le potentiel de l'acier est toujours inférieur à - 850 mV

Actuellement, les anodes sont externes et montées à proximité des embouts de connexion bien connus des spécialistes, lesquels embouts étant les organes terminaux d'une conduite flexible et servant à une connexion d'une extrémité de la conduite flexible avec un moyen fixe ou mobile, comme par exemple une tête de puits, un manifold, etc... ou encore une autre conduite flexible ou rigide, ou encore un organe d'accouplement de la structure flottante.

Dans un embout de connexion, toutes les armures de la conduite flexible sont repliées et mises en contact intime avec la voûte métallique de l'embout de connexion, généralement au moyen d'un cerclage de retenue et de maintien. Un capot métallique est disposé autour de l'assemblage ainsi réalisé et constitue la partie externe de l'embout connexion qui est étanche à l'eau, l'espace libre entre le capot et la voûte de l'embout étant rempli d'une résine telle que de l'ARALDITE. De plus, le capot de protection est vissé sur la voûte dudit embout de sorte qu'une liaison continue est assurée entre le capot, la voûte et toutes les armures comme le recommande la DNV (DET NORSKE VERITAS) RP-B401 (Cathodic protection design). Lorsqu'on dote la conduite flexible d'un ensemble anode de protection cathodique en vue de protéger les armures de la corrosion, un clamp ou collier est disposé autour de la conduite flexible et à une distance variant entre 1 et 15 m de l'embout de connexion d'extrémité. Le clamp présente une certaine longueur et une ou plusieurs anodes sont montées sur la périphérie externe du clamp.

Ensuite, on relie, au moyen d'une tresse métallique, la ou les anodes au capot de l'embout, de sorte que l'anode est reliée par une liaison conductrice d'électricité notamment aux armures repliées et à la voûte de l'embout d'extrémité.

Pour une section moyenne d'un trou dans la gaine externe, il est admis que l'efficacité maximale d'une anode est de l'ordre de 2000 m de chaque côté de ladite anode. Pour une conduite comme celle reposant sur le fond marin et appelée « flow line », la longueur protégée est au maximum de 4000 m, ce qui impose d'intercaler un embout de connexion tous les 4000 m si on souhaite avoir une protection efficace contre la corrosion sur toute la longueur de ladite conduite flexible. Il est habituel, pour renforcer la protection, de monter une anode de chaque côté de l'embout intercalaire et à faible distance de ce dernier, de la manière indiquée ci-dessus.

La présente invention a pour but de réaliser une protection cathodique de la partie d'une conduite flexible qui est immergée dans l'eau de mer sans l'utilisation d'embouts intermédiaires, de manière à réduire le coût de fabrication et d'exploitation d'une conduite flexible.

La présente invention a pour objet une conduite flexible sous-marine de transport de fluide avec un dispositif de protection cathodique la conduite flexible comprenant une gaine plastique d'étanchéité et une gaine plastique interne qui délimitent un espace annulaire dans lequel sont disposés des éléments structurels comportant au moins une nappe d'armures constituée de fils métalliques enroulés hélicoïdalement à pas long, un embout de connexion étant monté à chaque extrémité de ladite conduite flexible, le dispositif comprenant au moins une anode externe électriquement reliée par des moyens de liaison à ladite nappe d'armures, caractérisée en ce que l'anode est disposée dans une zone intermédiaire de la conduite flexible distale desdits embouts, les moyens de liaison reliant l'anode à au moins un des fils métalliques dans ladite zone intermédiaire.

Contrairement à ce que préconisent les spécialistes, on a trouvé qu'un seul contact électrique avec un seul fil métallique suffit à assurer la continuité de la protection cathodique.

Un avantage de la présente invention réside dans le fait que les dispositifs ou ensembles d'anodes lorsque la conduite flexible en comporte plusieurs sont montés sur la partie courante de ladite conduite flexible.

Un autre avantage réside dans le fait que la pose de la conduite flexible dans la mer est beaucoup plus rapide, ce qui réduit considérablement le coût des opérations de pose par notamment une immobilisation plus courte du navire de pose et le coût d'exploitation de la conduite flexible. Bien évidemment, cet avantage est réel en référence à une conduite flexible comportant un ou plusieurs embouts intermédiaires et non pas à une conduite flexible qui n'en comporte pas.

D'autres avantages et caractéristiques apparaîtront à la lecture de plusieurs modes de réalisation de l'anode selon l'invention, ainsi que des dessins annexés sur lesquels :
la figure 1 est une vue en plan schématique d'une conduite flexible de grande longueur munie à chaque extrémité d'un embout de connexion et de dispositifs selon l'invention.
La figure 2 est une vue en coupe partielle et schématique d'un tronçon de conduite flexible munie d'un dispositif selon l'invention.
La figure 3 est une vue en coupe d'un clamp ou collier monté sur une conduite flexible.
La figure 4 est une vue en coupe longitudinale, partielle et schématique d'un autre mode de réalisation du clamp ou collier utilisé dans le dispositif selon l'invention.
La figure 5 est une vue en élévation partielle et schématique d'un autre mode de réalisation du dispositif selon l'invention.
La figure 6 est une vue en perspective, partielle et schématique de deux enroulements d'armures comprises dans une conduite flexible.
La figure 7 est une vue en perspective partielle d'un type de conduite flexible.
La figure 8 est une vue en coupe schématique des moyens de liaison dans le cas où la conduite flexible comporte une bande isolante.

Dans l'industrie pétrolière et notamment dans une exploitation pétrolière en mer (offshore en anglais), plusieurs types de conduite flexible peuvent être utilisés et ils sont décrits et représentés dans l'API 17J (AMERICAN PETROLEUM INSTITUTE). Les conduites flexibles sont dites "SMOOTH BORE" lorsque l'élément le plus interne est constitué par une gaine polymérique et dites "ROUGH BORE" lorsque l'élément le plus interne est constitué par une carcasse métallique.

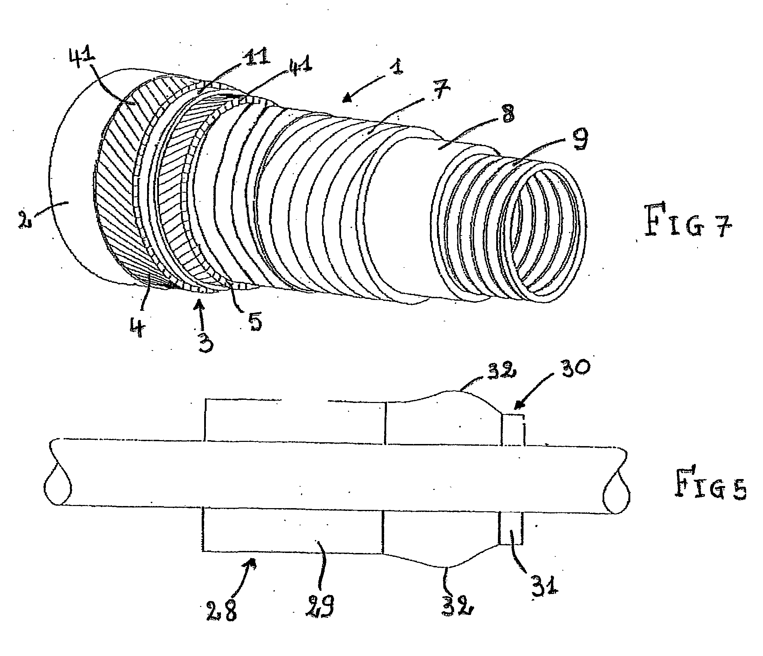

Quel que soit le type de conduite flexible, celle-ci comprend au moins deux nappes d'armures qui sont constituées chacune par des fils métalliques enroulés hélicoïdalement avec un pas long et un faible angle d'armage autour de l'axe longitudinal de la conduite flexible, les deux nappes d'armures étant croisées ou enroulées en sens inverse. Les fils métalliques 41 de chaque nappe d'armures sont généralement en contact ponctuel entre eux sur divers points. Bien évidemment, la conduite flexible peut comprendre plus de deux nappes d'armures, le résultat étant que l'enroulement des fils constituant les armures produit des milliers de points de contact entre deux nappes d'armures consécutives, ainsi que cela est représenté schématiquement sur la figure 6. Dans l'exemple de la figure 7, la conduite flexible 1 comprend de l'extérieur vers l'intérieur :
- une gaine polymérique externe et étanche 2 qui est exposée à l'eau de mer et/ou en contact avec le fond marin lorsque la conduite flexible est immergée en mer.
- un groupe 3 de nappes d'armures de traction comprenant deux nappes d'armures 4 et 5, enroulées de manière croisée ou en sens inverse avec un même angle d'armage.
- une voûte de pression 7,
- une gaine d'étanchéité polymérique interne 8, et
- une carcasse métallique 9 constituée par un enroulement à pas court proche de 90°.

Très souvent, un ruban anti-friction 11 est disposé entre deux armures consécutives et enroulé avec un pas court sur l'axe longitudinal de la conduite flexible.

Les deux gaines externe et interne d'étanchéité délimitent un espace annulaire dans lequel sont disposés les éléments structurels de la conduite flexible. Dans le cas de la figure 7, les éléments structurels sont constitués par les nappes d'armures de traction 4 et 5 ainsi que par la voûte de pression 7.

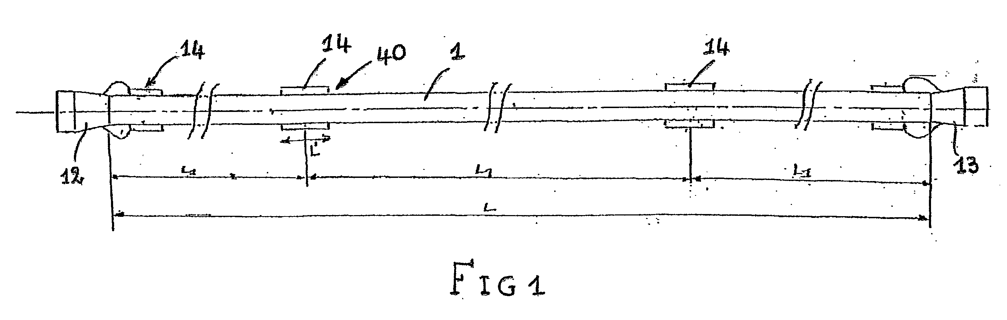

Le dispositif selon l'invention est destiné à être monté sur la longueur courante de la conduite flexible 1 ainsi que cela est représenté sur la figure 1. Par longueur courante, on entend des zones intermédiaires 40 de conduite flexible relativement éloignées des embouts d'extrémité 12 et 13 de ladite conduite flexible. On qualifie la position des zones intermédiaires 40 comme étant distales des embouts d'extrémité 12 ou 13 de la conduite flexible. Dans l'exemple représenté sur la figure 1, la conduite flexible a une longueur L supérieure à 6 kilomètres, ce qui nécessite d'utiliser deux dispositifs selon l'invention et qui sont référencés chacun dans leur ensemble par 14. Une zone intermédiaire 40, dans le présent contexte, est définie par la portion de conduite flexible entourée par le dispositif 14 plus, de part et d'autre du dispositif, une certaine portion proximale de la conduite flexible. Pour une longueur donnée L' d'un dispositif 14, la zone intermédiaire est de 4 à 5 fois ladite longueur L', les intervalles réguliers entre les embouts d'extrémité 12, 13 et les dispositifs 14 étant égaux à L₁, chaque intervalle L₁ étant déterminé en fonction de la portée d'un ensemble anode de protection cathodique, laquelle portée étant comprise entre 1,5 et 2 kms.

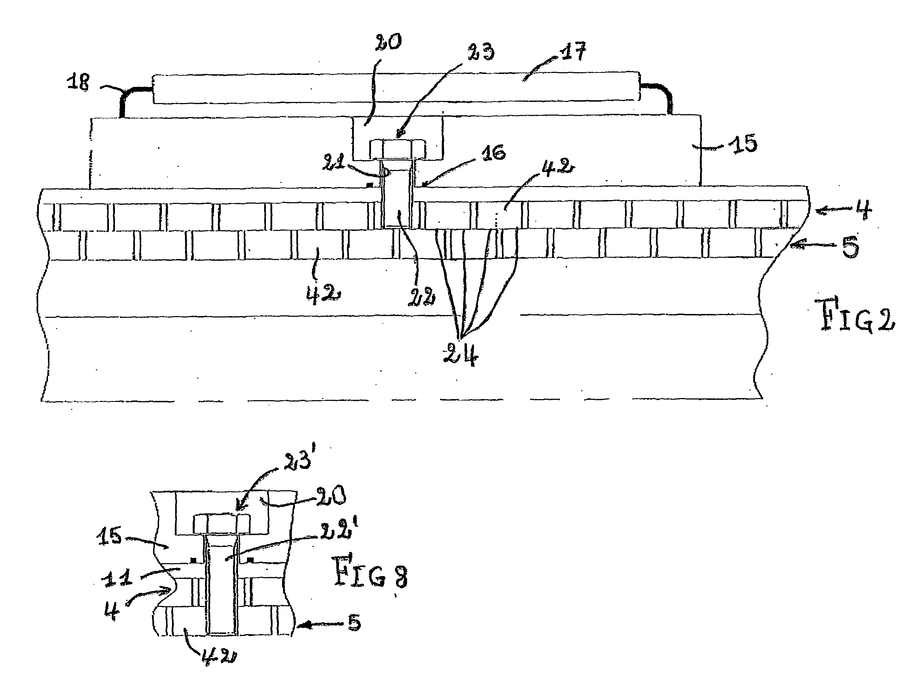

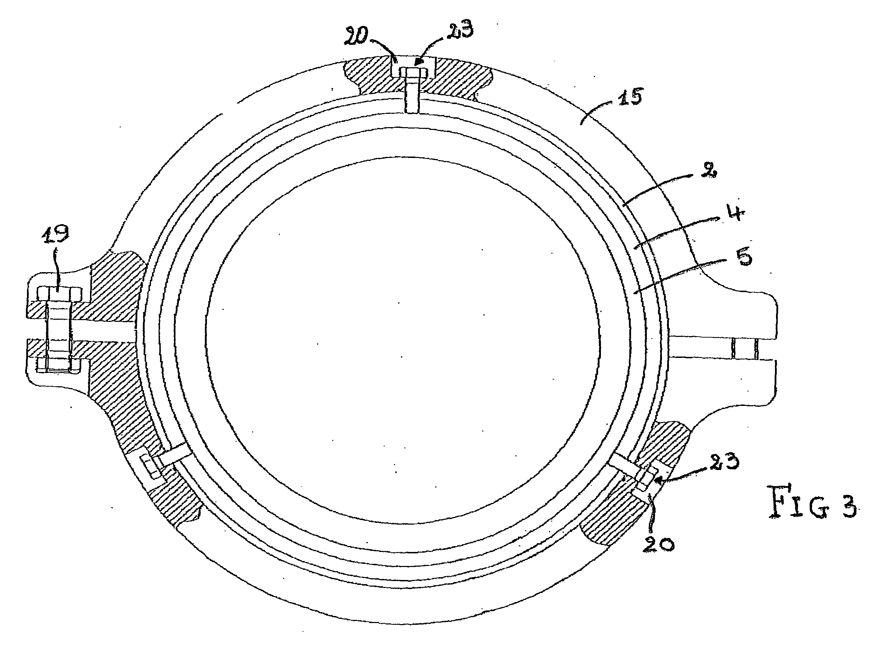

Le dispositif 14 comprend (figures 2 et 3) un collier 15 qui est souvent appelé clamp dans ce domaine technique particulier et qui est monté de manière serrée et de préférence étanche autour de la conduite flexible, l'étanchéité pouvant être obtenue par des joints circulaires ou toriques 16, et au moins une anode 17 qui est solidaire du collier 15, la continuité électrique entre l'anode 17 et le collier 15 étant assurée par des conducteurs 18. L'anode 17 se présente généralement sous la forme d'un parallélépipède de longueur comprise entre 1 et 5 m. Le nombre d'anodes 17 autour et à l'extérieur du collier est compris entre 1 et 6 en fonction de la protection anti-corrosion souhaitée, de la nature du métal utilisé pour constituer l'anode, métal qui est de préférence de l'aluminium, du zinc, etc..., le métal utilisé devant présenter un potentiel de référence plus faible que le potentiel d'immunité de l'acier des armures 4, 5, et de la durée de vie de la protection cathodique de la conduite flexible qui est de l'ordre de 20 ans. Dans ce qui précède, lorsque référence est faite à un ensemble anode, cela signifie que le dispositif de protection comprend une ou plusieurs anodes solidaires du collier de support.

Le collier 15 est constitué par deux brides semi-circulaires qui sont attachées ensemble, autour de la conduite flexible, par des boulons 19. A intervalles réguliers de préférence, le collier 15 comprend des évidements 20 et des passages traversants 21 pour l'introduction de tiges 22 de boulons 23, chaque tige 22 de boulon étant vissée ou en contact avec au moins un fil métallique de la première armure de traction 4 située immédiatement au-dessous de la gaine d'étanchéité externe 2 de la conduite flexible. De la sorte et pour autant que le collier est métallique, on est assuré de réaliser une liaison électrique entre l'ensemble anode 17 solidaire du collier 15 et tous les fils métalliques de la première nappe d'armures de traction 4. Sur la figure 2, les armures métalliques de traction sont représentées sous la forme de petits rectangles 42 qui sont censés être assimilés aux spires 41 des armures. Comme les spires d'une armure sont en contact ponctuel entre elles et à divers endroits, et avec les spires de l'autre nappe d'armures consécutive, on obtient des milliers de points de contact 24 entre les deux nappes d'armures 4 et 5. De ce fait, la continuité électrique est réalisée sur toute la longueur de la conduite flexible sous influence de ladite anode. Ainsi, la protection cathodique des armures de traction est assurée sur toute leur longueur utile.

Dans certains cas, la tige de vis 22 n'est pas vissée dans l'armure mais soudée, brasée ou collée sur l'armure 4, la finalité étant de réaliser une continuité électrique entre la ou les anodes 17 et la première armure 4.

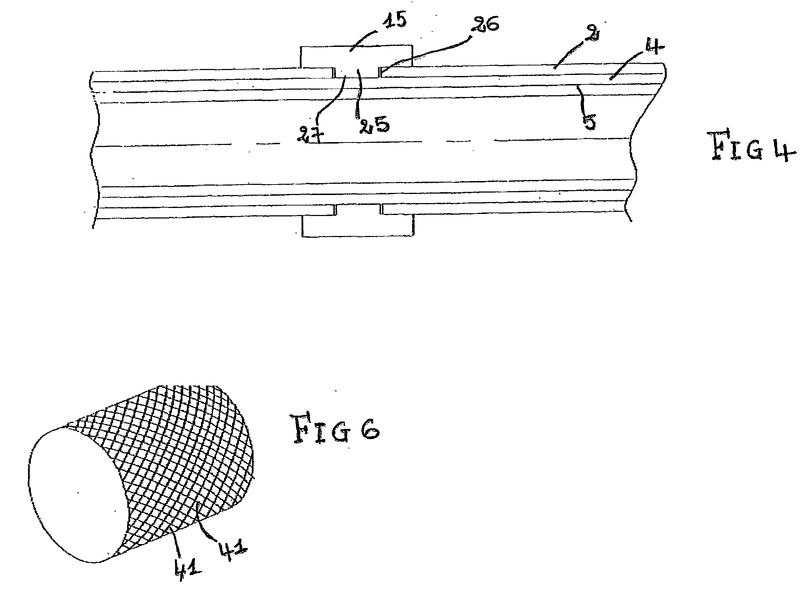

Dans une autre forme de réalisation de l'invention et représentée sur la figure 4, chaque demi-collier 15 comprend une partie pénétrante 25 qui se loge dans une encoche 26 ménagée dans la gaine externe d'étanchéité 2, l'extrémité inférieure 27 de la partie 25 venant en contact avec la première armure métallique 4. L'étanchéité entre l'encoche 26 et le milieu extérieur est assurée par des moyens connus et efficaces pour empêcher l'eau de mer d'envahir l'intérieur de la conduite flexible.

Dans un autre mode de réalisation de l'invention, le dispositif est en deux parties distinctes (figure 5). La première partie 28 est constituée par un collier 29 d'assez grande longueur et une ou plusieurs anodes (non représentées) solidaires dudit collier 29. Le collier 29 sert uniquement de support à la ou aux anodes et n'assure pas la continuité électrique avec l'armure 4. La deuxième partie 30 est constituée par un petit collier ou clamp 31 qui est relié électriquement au collier 29 par des conducteurs 32. C'est le clamp 31 qui comprend les moyens de mise en contact avec l'armure 4. Ces moyens peuvent être des boulons analogues aux boulons 23, des parties pénétrantes 25 comme celles de la figure 4 ou encore des tiges de boulons soudées, brasées ou collées sur au moins un fil métallique de ladite armure.

Il doit être compris que la zone de la conduite flexible sur laquelle sont montés les colliers 29 et 30 est une zone intermédiaire au sens de l'invention, quelle que soit la distance séparant les deux colliers 29 et 30. En pratique, cette distance du même ordre de grandeur que les anodes, est de 1 à 5 m environ.

Dans le type de conduite flexible représenté sur la figure 7, les deux armures 4 et 5 sont séparées par une bande anti-friction 11. Si on se contentait d'une continuité électrique entre l'anode et la première armure 4, la deuxième armure 5 ne serait plus protégée puisque la bande anti-friction 11 est isolante. Pour remédier à cela, on utilise (figure 8) un boulon 23' présentant une plus grande tige 22' qui traverse la première armure 4 et la bande anti-friction 11 jusqu'à venir en contact avec la deuxième armure 5. De la sorte, la ou les anodes sont reliées électriquement à la première armure 4 par la partie de tige la traversant, par exemple par vissage, et à la deuxième armure 5 par l'extrémité inférieure de la tige 22' qui peut être également vissée, soudée, brasée ou collée, sur ladite armure 5.

Dans le cas où les colliers 15, 29 ou 31 ne sont pas métalliques, il sera nécessaire de prévoir une liaison ou continuité électrique entre la ou les anodes montées sur le collier et la première ou deuxième armure de traction 4 ou 5, suivant que la conduite flexible comprend ou non une bande anti-friction.

Dans le mode de réalisation de la figure 5, le collier 29 peut ne pas être métallique et le collier 31 être métallique et conducteur d'électricité. La conduction entre la ou les anodes et l'armure considérée se ferait alors par les conducteurs 32 et les moyens de mise en contact prévus dans le collier 31.

## Revendications

1. Conduite flexible (1) sous-marine de transport de fluide avec un dispositif de protection cathodique la conduite flexible comprenant une gaine plastique d'étanchéité (2) et une gaine plastique interne (8) qui délimitent un espace annulaire dans lequel sont disposés des éléments structurels comportant au moins une nappe d'armures (3) constituée de fils métalliques (41) enroulés hélicoïdalement à pas long, un embout de connexion (12, 13) étant monté à chaque extrémité de ladite conduite flexible (1), le dispositif (14) comprenant au moins une anode (17) externe électriquement reliée par des moyens de liaison à ladite nappe d'armures, **caractérisée en ce que** l'anode (17) est disposée dans une zone intermédiaire (40) de la conduite flexible (1) distale desdits embouts, les moyens de liaison (23, 25) reliant l'anode à au moins un des fils métalliques dans ladite zone intermédiaire.

2. Conduite (1) selon la revendication 1, **caractérisée en ce que** la nappe d'armures (4) reliée à l'anode est adjacente à la gaine plastique externe d'étanchéité (2).

3. Conduite (1) selon la revendication 1, dans laquelle la conduite flexible comprend plusieurs nappes d'armures (4, 5) et **caractérisée en ce que** l'anode est reliée électriquement à au moins un seul fil métallique (41) de chaque nappe d'armures (4, 5).

4. Conduite (1) selon l'une des revendications 1 à 3, **caractérisée en ce que** les moyens de liaison (23, 25) sont constitués par au moins une tige métallique (22) traversante qui est en contact avec le ou les fils métalliques (41) à relier à l'anode (17).

5. Conduite (1) selon l'une des revendications 1 à 4, **caractérisée en ce que** l'anode (17) est solidaire d'un collier (15) qui est serré autour de la conduite flexible (1).

6. Conduite (1) selon la revendication 5, **caractérisée en ce que** le collier (15) comprend une partie interne traversante (25) et qui est en contact avec le ou les fils métalliques (41) à relier à l'anode.

7. Conduite (1) selon la revendication 5, **caractérisée en ce que** le collier (15) comprend plusieurs boulons traversants (23) régulièrement répartis sur la périphérie de la conduite flexible (1) et constituant chacun un des moyens de liaison.

8. Conduite (1) selon la revendication 7, **caractérisée en ce que** le contact entre l'extrémité inférieure de chaque boulon (23) sur un fil d'armure (41) est réalisé par brasure, soudure ou collage à l'aide d'une colle conductrice.

9. Conduite (1) selon les revendications 1 à 3 et 7, **caractérisée en ce qu'**au moins la nappe d'armures la plus externe (4) comprend au moins une partie taraudée (21) dans laquelle est reçue par vissage une tige filetée d'un des boulons (23).

10. Conduite (1) selon les revendications 1 ou 3, **caractérisée en ce que** lorsque la conduite flexible comprend plusieurs nappes d'armures (4, 5) séparées par des bandes intermédiaires isolantes (11), les moyens de liaison relient l'anode (17) à la nappe d'armures la plus interne (5) et située au-dessous de la dernière bande isolante (11).

11. Conduite (1) selon la revendication 10, **caractérisée en ce que** les moyens de liaison traversants assurent un contact avec chaque nappe d'armures de la conduite flexible qu'ils traversent.

12. Conduite (1) selon la revendication 1, **caractérisée en ce que** l'anode (17) montée dans la zone intermédiaire (40) est solidaire d'un premier collier de support (29), la liaison entre l'anode (17) et au moins un fil métallique (41) étant effectuée à travers un deuxième collier de liaison (31) situé à proximité du premier collier (29).

## Patentansprüche

1. Flexible Unterwasser-Fluidtransportleitung (1) mit einer Vorrichtung zum katodischen Schutz, wobei die flexible Leitung eine dichte Kunststoffhülle (2) und eine innere Kunststoffhülle (8) umfasst, die einen Ringraum begrenzen, in dem Strukturelemente angeordnet sind, die wenigstens eine Abschirmungslage (3) umfassen, die aus schraubenlinienförmig gewickelten Metalldrähten (41) mit großer Schrittweite gebildet ist, wobei an jedem Ende der flexiblen Leitung (1) ein Verbindungsstutzen (12, 13) angebracht ist, wobei die Vorrichtung (14) wenigstens eine externe Anode (17) umfasst, die über Verbindungsmittel mit der Abschirmungslage elektrisch verbunden ist, **dadurch gekennzeichnet, dass** die Anode (17) in einer Zwischenzone (40) der flexiblen Leitung (1) entfernt von den Stutzen angeordnet ist, wobei die Verbindungsmittel (23, 25) die Anode mit wenigstens einem der Metalldrähte in der Zwischenzone verbinden.

2. Leitung (1) nach Anspruch 1, **dadurch gekennzeichnet, dass** die Abschirmungslage (4), die mit der Anode verbunden ist, an die dichte äußere Kunststoffhülle (2) angrenzt.

3. Leitung (1) nach Anspruch 1, bei der die flexible Leitung mehrere Abschirmungslagen (4, 5) umfasst, **dadurch gekennzeichnet, dass** die Anode mit wenigstens einem einzigen Metalldraht (41) jeder Abschirmungslage (4, 5) elektrisch verbunden ist.

4. Leitung (1) nach einem der Ansprüche 1 bis 3, **dadurch gekennzeichnet, dass** die Verbindungsmittel (23, 25) durch wenigstens einen Metalldurchgangsstift (22) gebildet sind, der mit dem oder den Metalldrähten (41), die mit der Anode (17) zu verbinden sind, in Kontakt ist.

5. Leitung (1) nach einem der Ansprüche 1 bis 4, **dadurch gekennzeichnet, dass** die Anode (17) mit einem Rand (15) fest verbunden ist, der um die flexible Leitung (1) geklemmt ist.

6. Leitung (1) nach Anspruch 5, **dadurch gekennzeichnet, dass** der Rand (15) einen inneren Durchgangsteil (25) aufweist, der mit dem oder den Metalldrähten (41), die mit der Anode zu verbinden sind, in Kontakt ist.

7. Leitung (1) nach Anspruch 5, **dadurch gekennzeichnet, dass** der Rand (15) mehrere Durchgangsbolzen (23) aufweist, die auf dem Umfang der flexiblen Leitung (1) regelmäßig verteilt sind und jeweils eines der Verbindungsmittel bilden.

8. Leitung (1) nach Anspruch 7, **dadurch gekennzeichnet, dass** der Kontakt zwischen dem unteren Ende jedes Bolzens (23) an einem Abschirmungsdraht (41) durch Löten, Schweißen oder Kleben mit Hilfe eines leitenden Klebstoffs verwirklicht ist.

9. Leitung (1) nach einem der Ansprüche 1 bis 3 und 7, **dadurch gekennzeichnet, dass** wenigstens die äußerste Abschirmungslage (4) wenigstens einen mit Innengewinde versehenen Teil (21) aufweist, in dem ein mit Außengewinde versehener Stift eines der Bolzen (23) durch Schrauben aufgenommen ist.

10. Leitung (1) nach den Ansprüchen 1 oder 3, **dadurch gekennzeichnet, dass** die Verbindungsmittel dann, wenn die flexible Leitung mehrere durch isolierende Zwischenbänder (11) voneinander getrennte Abschirmungslagen (4, 5) aufweist, die Anode (17) mit der innersten Abschirmungslage (5), die sich unter dem letzten isolierenden Band (11) befindet, verbinden.

11. Leitung (1) nach Anspruch 10, **dadurch gekennzeichnet, dass** die Durchgangsverbindungsmittel einen Kontakt mit jeder der Abschirmungslagen der flexiblen Leitung, durch die sie verlaufen, sicherstellen.

12. Leitung (1) nach Anspruch 1, **dadurch gekennzeichnet, dass** die Anode (17), die in der Zwischenzone (40) angebracht ist, mit einem ersten Trägerrand (29) fest verbunden ist, wobei die Verbindung zwischen der Anode (17) und wenigstens einem Metalldraht (41) durch einen zweiten Verbindungsrand (31) erfolgt, der sich in der Nähe des ersten Randes (29) befindet.

## Claims

1. Subsea flexible pipe (1) for transporting fluid with a cathodic protection device, the flexible pipe comprising a plastic sealing sheath (2) and an inner plastic sheath (8) which define an annular space in which structural elements are placed, the said structural elements comprising at least one armour ply (3) consisting of metal wires (41) wound helically with a long pitch, a end fitting (12, 13) being fitted at each end of the said flexible pipe (1), the device (14) comprising at least one external anode (17) electrically connected by connection means to the said armour ply, **characterized in that** the anode (17) is placed in an intermediate region (40) of the flexible pipe (1) distal from the said end fittings, the connection means (23, 25) connecting the anode to at least one of the metal wires in the said intermediate region.

2. Pipe (1) according to Claim 1, **characterized in that** the armour ply (4) connected to the anode is adjacent to the outer plastic sealing sheath (2).

3. Pipe(1) according to Claim 1, in which the flexible pipe comprises several armour plies (4, 5) and **characterized in that** the anode is electrically connected to at least one single metal wire (41) of each armour ply (4, 5).

4. Pipe(1) according to one of Claims 1 to 3, **characterized in that** the connection means (23, 25) consist of at least one penetrating metal shank (22) which is in contact with the metal wire or wires (41) to be connected to the anode (17).

5. Pipe (1) according to one of Claims 1 to 4, **characterized in that** the anode (17) is fastened to a clamp (15) which is clamped around the flexible pipe (1).

6. Pipe (1) according to Claim 5, **characterized in that** the clamp (15) comprises a penetrating internal part (25) which is in contact with the metal wire or wires (41) to be connected to the anode.

7. Pipe (1) according to Claim 5, **characterized in that** the clamp (15) comprises several penetrating bolts (23) uniformly distributed around the periphery of the flexible pipe (1) and each constituting one of the connection means.

8. Pipe (1) according to Claim 7, **characterized in that** contact between the lower end of each bolt (23) on an armour wire (41) is provided by brazing, welding or adhesive bonding using a conductive adhesive.

9. Pipe (1) according to Claims 1 to 3 and 7, **characterized in that** at least the outermost armour ply (4) comprises at least one tapped part (21) into which a threaded shank of one of the bolts (23) is inserted by screwing.

10. Pipe (1) according to either of Claims 1 and 3, **characterized in that** when the flexible pipe comprises several armour plies (4, 5) separated by insulating intermediate tapes (11), the connection means connect the anode (17) to the innermost armour ply (5) lying beneath the last insulating tape (11).

11. Pipe (1) according to Claim 10, **characterized in that** the penetrating connection means provide contact with each armour ply of the flexible pipe through which they pass.

12. Pipe (1) according to Claim 1, **characterized in that** the anode (17) fitted in the intermediate region (40), is fastened to a first support clamp (29), the connection between the anode (17) and at least one metal wire (41) being made through a second connection clamp (31) located near the first clamp (29).
